# EUROPÄISCHE PATENTANMELDUNG

(11) **EP 4 455 812 A1**
(43) Veröffentlichungstag der Anmeldung: **30.10.2024**
(21) Anmeldenummer: 23169863.0
(22) Anmeldetag: 25.04.2023
(51) Int. Cl.: G05B 19/4063, G05B 19/414, B25J 9/16, G05B 9/03, G05B 19/042

(54) **STEUERUNGSSYSTEM UND VERFAHREN ZUR SICHEREN STEUERUNG EINER TECHNISCHEN ANLAGE**

(71) Anmelder: TTTech Computertechnik Aktiengesellschaft, 1040 Wien (AT)
(72) Erfinder: Kopetz, Hermann, 9201 Krumpendorf (AT)
(74) Vertreter: Patentanwaltskanzlei Matschnig & Forsthuber OG

(57) **Zusammenfassung**

Die Erfindung liegt auf dem Gebiet der Computertechnik und betrifft ein Subsystem, das *Decision System,* einer verteilten fehlertoleranten Computer-Architektur zur vollautonomen Steuerung einer technischen Anlage. Eine mögliche Architektur eines solchen verteilten fehlertoleranten *Steuerungssystems* ist von H. Kopetz in den *Springer Lecture Notes on Computer Science (LNCS) Vol. 13660, Chapter 4, pp. 61-84* unter dem Titel *An Architecture for Safe Driving Automation* im Dezember 2022 veröffentlicht worden [Kop22]. Dieses sichere *Steuerungssystem* besteht aus vier Subsystemen, deren jedes ein unabhängiges Hardware/Software System ist und wo jedes der vier *Subsysteme eine Fault-Containment Unit* bildet. Die vier unabhängigen Subsysteme der beschriebenen Architektur sind ein *Primary Control System,* ein *Monitoring System (MS),* ein *Fallback System* und ein *Decision System.* Unter der Voraussetzung, dass das *Decision System* immer fehlerfrei funktioniert, führt das von H. Kopetz dargestellte Steuerungssystem die technische Anlage in einen sicheren Zustand, wenn ein beliebiger (Byzantinischer) Fehler in einem der anderen drei Subsysteme auftritt. Die vorliegende Erfindung erweitert diese Architektur, so dass auch bei Auftreten eines *fail-silent Fehlers* des *Decision Systems* die Anlage in einen sicheren Zustand geführt wird.

## Beschreibung

Die Erfindung betrifft ein Steuerungssystem zur sicheren Steuerung einer technischen Anlage sowie und ein Verfahren zur Steuerung mit einem solchen Steuerungssystem, wobei das *Steuerungssystem* vier voneinander unabhängige Computersubsysteme umfasst, ein *Primary Control System, PCS,* ein *Monitoring System, MS,* ein *Fallback System, FBS,* und ein *Decision System, DS,*
wobei *das PCS* in jeder Zeitscheibe Sollwerte für die Steuerung der technischen Anlage berechnet und die Sollwerte vor dem Ende der Zeitscheibe jeweils in einer Nachricht an das MS und das DS sendet, und wobei das MS in jeder Zeitscheibe die Sollwerte, die es vom PCS erhalten hat, überprüft, und das Ergebnis dieser Überprüfung-TRUE oder *FALSE-*vor dem Ende der Zeitscheibe in einer Nachricht an das DS übermittelt, und wobei das *FBS* in jeder Zeitscheibe Sollwerte berechnet, welche die Anlage von einem gegenwärtigen Zustand in einen sicheren Zustand führen können, und wobei das FBS diese Sollwerte in einer Nachricht an das DS sendet, und wobei das DS in jeder Zeitscheibe je eine Nachricht von dem PCS, dem MS und dem FBS empfängt und aufgrund des Ergebnisses der Überprüfung durch das MS entscheidet, ob es die Sollwerte des PCS oder des FBS, die sogenannten "ausgewählten" Sollwerte, an die Aktuatoren gesendet werden, und wobei die Aktuatoren intelligente Aktuatoren, IA, sind, welche über einen ersten Eingangskanal und eine zweiten Eingangskanal verfügen.

Die Erfindung liegt auf dem Gebiet der Computertechnik und betrifft ein Steuerungssystem zur, insbesondere vollautonomen, Steuerung einer technischen Anlage.

Die sichere vollautonome Steuerung einer *technischen Anlage* (z.B. einer Maschine, eines Roboter oder eines Fahrzeugs) erfordert ein Steuerungssystem in Form eines verteilten fehlertoleranten Echtzeitcomputersystems, bestehend aus einer Anzahl von Subsystemen, das die Anlage unter den gegebenen Bedingungen autonom steuert und auch bei dem Ausfall eines Subsystems die Anlage in einen sicheren Zustand führt.

Eine mögliche Architektur eines solchen verteilten fehlertoleranten *Steuerungssystems* ist von H. Kopetz in den Springer Lecture Notes on Computer Science (LNCS) Vol. 13660, Chapter 4, pp. 61-84 unter dem Titel An Architecture for Safe Driving Automation im Dezember 2022 veröffentlicht worden [Kop22]. Dieses sichere *Steuerungssystem* besteht aus vier Subsystemen, deren jedes ein unabhängiges Hardware/Software System ist und wo jedes der vier *Subsysteme eine Fault-Containment Unit* bildet.

Eine *Fault-Containment Unit (FCU)* ist ein unabhängiges abgeschlossenes Subsystem, das mit seiner Umgebung über den Austausch von Nachrichten kommuniziert. Ein interner Fehler einer FCU, gleichgültig ob er durch Software, Hardware oder eine Intrusion verursacht wird, äußert sich im Ausbleiben oder der Verfälschung einer richtigen Nachricht.

In der beschriebenen Architektur [Kop22] wird das Fortschreiten der Zeit durch eine Folge von Zeitscheiben modelliert. Am Beginn jeder Zeitscheibe beobachtet ein Subsystem seine Umgebung. Während der Dauer einer Zeitscheibe berechnet ein Subsystem neue Sollwerte für die Aktuatoren. Vor dem Ende jeder Zeitscheibe gibt ein Subsystem die neu berechneten Sollwerte in der Form von Nachrichten an seine Umgebung aus. Die "Umgebung" eines Subsystems umfasst dabei alle Subsysteme, die Nachrichten vom gegebenen Subsystem empfangen oder Nachrichten an das gegebene Subsystem senden.

Die vier unabhängigen Subsysteme der beschriebenen Architektur sind ein *Primary Control System (PCS),* ein *Monitoring System (MS),* ein *Fallback System (FBS)* und ein *Decision System (DS).*

Diese vier unabhängigen Subsysteme sind mit Kommunikationskanälen verbunden, über die periodische zeitgesteuerte Nachrichten ausgetauscht werden können. Eine notwendige Voraussetzung für den Austausch von zeitgesteuerten Nachrichten ist die Verfügbarkeit einer zuverlässigen globalen Zeitbasis.

Das unabhängige, mit Sensoren ausgestattet *Primary Control System (PCS)* steuert die technische Anlage unter *normalen Bedingungen* und berechnet in jeder Zeitscheibe einen Satz von Sollwerten, die das zukünftige beabsichtigte Verhalten der Anlage spezifikationsgemäß festlegen. Die aktuellen Sollwerte werden vor dem Ende einer Zeitscheibe in einer Nachricht an das Monitoring System (MS) und das Decision System (DS) gesendet. Die *normalen Bedingungen* müssen in der Spezifikation des Steuerungssystems präzise spezifiziert sein.

Das unabhängige, mit Sensoren ausgestattete *Monitoring System (MS)* überprüft in jeder Zeitscheibe die Sollwerte, die es vom PCS erhalten hat. Das Ergebnis der Überprüfung-TRUE oder *FALSE-* wird vor dem Ende einer Zeitscheibe in einer Nachricht an das Decision System (DS) gesendet.

Das unabhängige *Fallback System (FBS)* beobachtet mit seinen Sensoren das Verhalten der technischen Anlage in ihrer Umgebung und berechnet in jeder Zeitscheibe einen Satz von Sollwerten, der die Anlage vom gegenwärtigen Zustand in einen sicheren Zustand führt, und sendet diese Sollwerte in einer Nachricht an das Decision System (DS). In der Wirklichkeit können *anomale Bedingungen* auftreten, die von der Spezifikation des *Primary Control Systems (PCS)* nicht abgedeckt sind. Das FBS System muss versuchen, die Anlage auch unter diesen *anormalen Bedingungen* in einen sicheren Zustand zu führen.

Das unabhängige *Decision System* (DS) empfängt in jeder Zeitscheibe je eine Nachricht von dem PCS, dem MS und dem FBS und entscheidet aufgrund der Bewertung des MS, ob die Ausgabedaten des PCS oder des FBS an die Aktuatoren gesendet werden.

Unter der Annahme, dass das Decision System (DS) *keinen Fehler macht,* toleriert dieses in [Kop22, pp. 61-84] beschriebene Steuerungssystem einen einzigen beliebigen Fehler des PCS, des MS oder des FBS und führt die Anlage im Fehlerfall in einen sicheren Zustand.

Es ist eine Aufgabe der Erfindung, eine Lösung anzugeben, mit welcher in einem eingangs beschriebenen Steuerungssystem sichergestellt werden kann, dass auch bei einem *fail-silent Fehler* des Decision Systems (DS) die Anlage in einen sicheren Zustand geführt wird.

Diese Aufgabe wird dadurch gelöst, dass das DS in jeder Zeitscheibe im fehlerfreien Fall des DS die ausgewählten *Sollwerte* in einer zeitgesteuerten Nachricht zu einem *a priori* bestimmten periodischen ersten Zeitpunkt an den ersten *Eingangskanal* des IA sendet, und wobei
das DS ein *fail-silent Verhalten* aufweist, so dass bei Auftreten eines Fehlers im DS keine Nachricht an den IA gesendet wird,
und wobei das FBS dazu eingerichtet ist, in jeder *Zeitscheibe* seine errechneten Sollwerte in einer *zeitgesteuerten Nachricht* zu einem *a priori* bestimmten periodischen zweiten Zeitpunkt_2 an den zweiten *Eingangskanal* des IA zu senden,
und wobei in jeder Zeitscheibe der zweite Zeitpunkt_2 zeitlich vor dem ersten Zeitpunkt_1 liegt,
und wobei der IA nach dem ersten Zeitpunkt_1 überprüft, ob vom IA eine vom DS gesendete Nachricht in der gegenwärtigen Zeitscheibe empfangen wurde, und wobei
   - falls dies der Fall ist, der IA die in der vom DS gesendeten und vom IA empfangenen Nachricht enthaltenen *Sollwerte* an die Anlage leitet, und
   - falls dies nicht der Fall ist, der IA die in der vom FBS an den zweiten Eingangskanal des IA gesendeten Nachricht enthaltenen *Sollwerte* an die Anlage leitet, und der IA in allen folgenden Zeitscheiben so lange die vom FBS über den zweiten Empfangskanal empfangenen Sollwerte an die Anlage leitet, bis das Steuerungssystem neu initialisiert ist.

Erfindungsgemäß wird angenommen, dass das Decision System (DS) im Fehlerfall des DS keine Nachricht ausgibt—d.h. das DS zeigt ein fail-silent Verhalten. *Dieses fail-silent* Verhalten des DS wird wie folgt erreicht: die Software des DS ist *einfach,* sodass die Software des DS formal spezifiziert, die Richtigkeit der Software formal überprüft und ein Softwarefehler somit ausgeschlossen werden kann. Die Software des DS wird auf einem fehlererkennenden Prozessor, wie diese am Markt verfügbar sind (z.B. Infineon AURIX: https://en.wikipedia.org/wiki/Infineon_AURIX), ausgeführt, so dass ein Hardwarefehler von der Hardware erkannt und im Fehlerfall der Hardware das DS System abgeschaltet wird, somit die Ausgabe einer Nachricht vom DS unterbunden und damit das fail-silent Verhalten realisiert wird.

Erfindungsgemäß ist vorgesehen, dass das Decision System (DS) im Normalfall die ausgewählten Sollwerte in einer zeitgesteuerten Nachricht an einen *intelligenten Aktuator* sendet. Der intelligente Aktuator hat zwei unabhängige Eingangskanäle für Nachrichten, einen ersten Kanal für Nachrichten vom DS und einen zweiten Kanal für Nachrichten vom FBS.

Hochzuverlässige intelligente Aktuatoren mit zwei unabhängigen Eingangskanälen sind in Fahrerassistenzsystemen Stand der Technik. In einem Fahrerassistenzsystem muss ein intelligenter Aktuator über einen ersten Eingabekanal für die Sollwerte vom Assistenzsystem und einen zweiten Eingabekanal für die Sollwerte des Fahrers verfügen. Aufgrund gegebener Kriterien entscheidet der intelligente Aktuator, welche Sollwerte an die Anlage weitergeleitet werden.

Erfindungsgemäß entscheidet der intelligente Aktuator in der vorliegenden Architektur wie folgt:
(i) Wenn unmittelbar nach dem *a priori* bekannten Zeitpunkt des geplanten Eintreffens der zeitgesteuerten Nachricht vom DS keine aktuelle Nachricht vom DS am ersten Kanal vorhanden ist, übernimmt der intelligente Aktuator den Sollwert der aktuellen Nachricht, die am zweiten Kanal vom FBS empfangen wurde.
(ii) In der Zukunft (nach der ersten Übernahme der Sollwerte vom FBS) übernimmt der intelligente Aktuator die periodisch eintreffenden Sollwerte vom FBS, bis die Anlage einen sicheren Zustand erreicht hat.

Durch die Erfindung wird somit sichergestellt, dass bei einem *fail-silent Ausfall* des Decision Systems (DS) die Anlage in einen sicheren Zustand geführt wird.

Vorteilhafte Ausgestaltungen des Steuerungssystems und des Verfahrens sind in den abhängigen Ansprüchen beschrieben.

Es kann vorgesehen sein, dass das MS ein Modell der Anlage und seiner Umgebung erzeugt und auf Basis dieses Modells überprüft, ob die vom PCS empfangenen Sollwerte ein sicheres Verhalten der Anlage gewährleisten, und falls ein sicheres Verhalten gewährleistet ist, als Ergebnis der Prüfung der Nachricht den Wert *TRUE* an das DS sendet und anderenfalls den Wert *FALSE* in der Nachricht sendet.

Vorzugsweise ist vorgesehen, dass das Steuerungssystem neu initialisiert wird, nachdem die Anlage einen *sicheren Zustand* erreicht hat.

Mit Vorteil besteht das MS aus zwei Subsystemen, einem *Berechnungssystem* und einem *Überprüfungssystem,* wobei die Gesamtheit dieser beiden Subsysteme eine einzige *Fault-Containment Unit* bildet.

Vorzugsweise kann vorgesehen sein, dass im MS die Berechnungsphase der nächstfolgenden Zeitscheibe zeitlich parallel zur Überprüfungsphase der gegenwärtigen Zeitscheibe ausgeführt wird.

Mit Vorteil ist vorgesehen, dass, wenn die Nachricht des MS an das DS den Wert FALSE enthält, im fehlerfreien Fall des DS das DS in seiner Nachricht an den ersten Eingangskanal des IA die vom FBS erhaltenen Sollwerte als ausgewählte Sollwerte übermittelt, und wobei das DS in allen folgenden Zeitscheiben so lange die Sollwerte des FBS an den ersten Empfangskanal des IA sendet, bis das Steuerungssystem oder das DS neu initialisiert ist.

Weiters kann vorzugsweise vorgesehen sein, dass das MS in einer Zeitscheibe in einer Nachricht die vom PCS errechneten Sollwerte erhält, weiters in einer Nachricht vom DS die Sollwerte, die das PCS in einer Nachricht an das DS gesendet hat, erhält, und das MS eine Nachricht an das DS sendet, deren Inhalt auf FALSE gesetzt ist, falls der Inhalt der Nachricht vom DS vom Inhalt der Nachricht vom PCS abweicht.

Mit Vorteil ist vorgesehen, dass das DS eine *einfache* Software und einen fehlererkennenden Prozessor umfasst, auf welchem die einfache Software zur Berechnung der Sollwerte ausgeführt wird.

### Begriffsbestimmungen

Im Folgenden wird die Bedeutung von wichtigen Begriffen, die in der Beschreibung verwendet werden, dargelegt.

**Anormale Bedingungen:** Bedingungen der Anlage oder in der Umwelt der Anlage, die möglicherweise zu einem unsicheren Verhalten einer Anlage führen können, die jedoch in der Spezifikation der Anlage nicht enthalten sind.

**Berechnungsphase:** Die erste periodisches Phase einer Zeitscheibe, während der das *Primary Control System (PCS)* und das *Fallback System (FBS)* ihre Sollwerte errechnen. und während der das *Monitor System* (MS) ein Modell der Anlage und seiner Umgebung auf der Basis der Sensorik des *Monitor Systems* (MS) aufbaut.

**Berechnungssystem:** Ein Subsystem des Monitoring Systems, das in der Berechnungsphase aktiv ist.

**Decision Systems (DS):** Ein Subsystem des Steuerungssystems, das eine Fault-Containment Unit (FCU) bildet und in jeder Zeitscheibe entscheidet, ob die Sollwerte des *Primary Control Systems (PCS)* oder des *Fallback Systems (FBS)* an den intelligenten Aktuator (IA) übergeben werden

**Eingangskanal:** Ein Kommunikationskanal eines intelligenten Aktuators zum Empfang von Nachrichten

**Empfangszeitpunkt (EZ):** Der Zeitpunkt zu dem der Empfang einer Nachricht abgeschlossen ist.

**Fail-silent Computer:** Ein Computer, der in der Lage ist, einen aufgetretenen Fehler zu erkennen und im Fehlerfall jede Ausgabe unterbindet. Ein fail-silent Computer produziert entweder richtige Ausgaben oder keine Ausgaben.

**Fallback System (FBS):** Ein Subsystem des Steuerungssystems, das als FCU ausgebildet ist und welches das Verhalten einer technischen Anlage vom gegenwärtigen (möglicherweise sicherheitskritischen) Zustand in einen sicheren Zustand führt.

**Fault Containment Unit (FCU):** Ein unabhängiges abgeschlossenes Subsystem, das mit seiner Umgebung durch den Austausch von Nachrichten kommuniziert. Ein interner Fehler einer FCU, gleichgültig ob er durch Software, Hardware oder eine Intrusion ausgelöst wird, äußert sich im Ausbleiben oder der Verfälschung einer erwarteten Nachricht.

**Intelligenter Aktuator:** Ein Aktuator ist ein technischer Apparat, der einen digitalen Sollwert in eine Wirkung in der physischen Realität umsetzt. Ein intelligenter Aktuator hat zwei Eingangskanäle für unterschiedliche Sollwerte und entscheidet auf der Basis von *a priori* spezifizierten Kriterien, welche Sollwerte in der gegebenen Situation zur Anwendung zu bringen sind.

**Monitoring System (MS):** Ein Subsystem des Steuerungssystems, das eine Fault-Containment Unit (FCU) bildet und in jeder *Berechnungsphase* einer Zeitscheibe auf der Basis seiner Sensordaten ein Modell der Anlage und seiner Umgebung errechnet und das in der *Überprüfungsphase* einer Zeitscheibe feststellt, ob die von dem *Primary Control System (PCS)* empfangenen Sollwerte unter den gegebenen Bedingungen zu einem sicheren Verhalten der Anlage führen.

**Normale Bedingungen:** Bedingungen für das sichere Verhalten einer Anlage, die in der Spezifikation der Anlage präzise angegeben sind.

**Primary Control System (PCS):** Ein Steuerungssystem, das unter *normalen Bedingungen* die Sollwerte für das Verhalten der technischen Anlage, insbesondere des mechanischen Systems der technischen Anlage entsprechend einer vorliegenden Spezifikation errechnet.

**Sendezeitpunkt (SZ):** Der Zeitpunkt, zu dem der Sendevorgang einer Nachricht beginnt.

**Sicherer Zustand:** Zustand einer Anlage, in dem das Risiko eines unerwünschten Verhaltens der Anlage ausgeschlossen ist.

**Situationsvariable:** Zustandsvariable im *Decision System (DS)* und im *intelligenten Aktuator* (IA), die angibt, ob sich das Gesamtsystem in einem *normalen* oder *anormalen* Zustand befindet.

**Sollwert:** Digitale Vorgabe eines Wertes für einen Aktuator, die eine Wirkung in der physischen Realität hervorruft.

**Steuerungssystem:** Das den mechanischen Teil einer Anlage steuernde hochzuverlässige verteilte Computersystem.

**Technische Anlage:** Eine technische Anlage (z.B. eine Maschine, ein Roboter oder ein Fahrzeug) besteht aus einem *mechanischen System* und einem *Steuerungssystem,* das das Verhalten des mechanische Systems bestimmt.

**Überprüfungsphase:** Die zweite periodische Phase einer Zeitscheibe, während der das MS die vom *Primary Control System (PCS)* erhaltenen Sollwerte überprüft, das DS die Entscheidung trifft, welche Sollwerte dem *intelligenten Aktuator (IA)* übergeben werden und der *intelligente Aktuator (IA)* entscheidet, ob die am ersten Kanal oder am zweiten Kanal empfangenen Sollwerte verwendet werden.

**Überprüfungssystem:** Ein Subsystem des Monitoring Systems, das in der Überprüfungsphase aktiv ist.

**Zeitgesteuerte Nachricht:** Eine Nachricht, deren periodische Sende- und Empfangszeitpunkte a *priori* (im Systementwurf) des Steuerungssystems festgelegt worden sind.

**Zeitscheibe:** Ein periodisches Intervall auf der Zeitachse, das in eine *Berechnungsphase* und eine *Überprüfungsphase* unterteilt wird. Die Überprüfungsphase der gegenwärtigen Zeitscheibe kann parallel zur Berechnungsphase der folgenden Zeitscheibe ausgeführt werden.

Im Folgenden ist die Erfindung an Hand eines nicht einschränkenden Ausführungsbeispiels in den Figuren näher beschrieben. Dabei zeigt
Fig. 1 die Struktur eines erfindungsgemäßen Steuerungssystems, und
Fig. 2 die Kommunikation der Subsysteme des Steuerungssystems innerhalb einer Zeitscheibe.

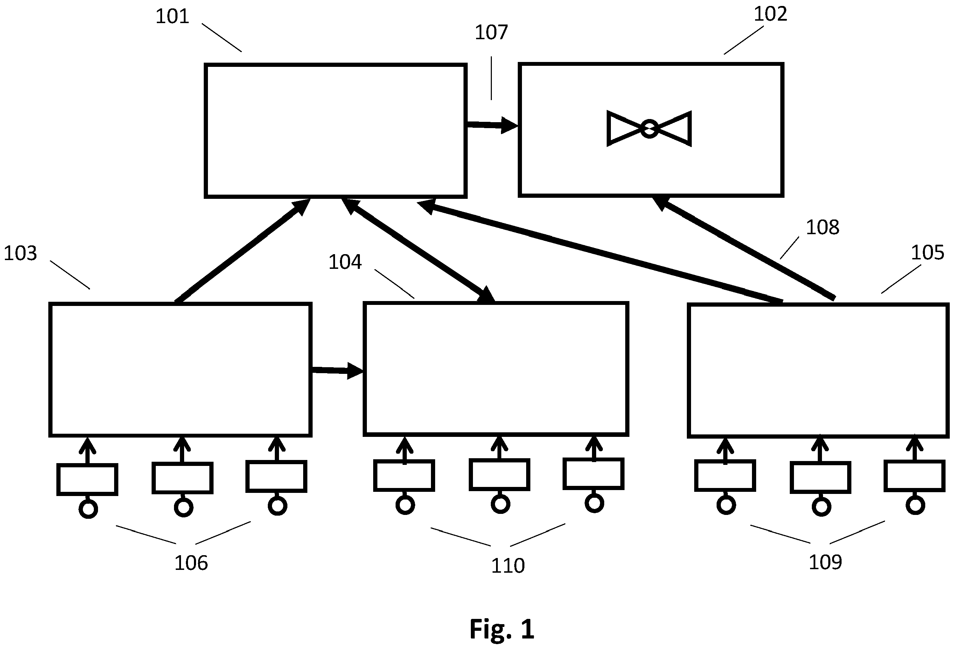

Fig. 1 zeigt die verteilte Struktur des Steuerungssystems zur Steuerung einer technischen Anlage, insbesondere zur sicheren Steuerung der technischen Anlage. Die Pfeile in Fig. 1 veranschaulichen Kommunikationskanäle für den zeitgesteuerten Transport von Nachrichten.

*Das Steuerungssystem* besteht aus vier voneinander unabhängigen Computersubsystemen, dem *Primary Control System, PCS,* **103,** DEM *Monitoring System, MS,* **104,** DEM *Fallback System, FBS,* **105** und DEM *Decision System, DS,* **101.**

Das PCS **103** mit seiner Sensorik **106** errechnet unter *normale Bedingungen* in jeder Zeitscheibe neue Sollwerte für die zu steuernde Anlage. Diese Sollwerte werden an das DS **101** und an das MS **104** übergeben.

Das FBS **105** mit seiner Sensorik **109** errechnet in jeder Zeitscheibe neue Sollwerte, die die Anlage vom gegenwärtigen Zustand in einen sicheren Zustand führen können und sendet diese Sollwerte an das DS **101** und an einen Eingangskanal **108** eines intelligenten Aktuators **102,** den sogenannten zweiten Eingangskanal **108.**

Das MS **104** bildet mit seiner Sensorik **110** ein unabhängiges Modell der Anlage und deren Umgebung und überprüft anschließend, ob die vom PCS **103** mit seiner Sensorik **106** errechneten Sollwerte in dieser vom MS **104** modellierten Umgebung ein sicheres Verhalten der Anlage gewährleisten. Wenn dies der Fall ist, so wird der Wert *TRUE* dem DS **101** gemeldet. Wenn dies nicht der Fall ist, so wird der Wert *FALSE* dem DS **101** gemeldet.

Das DS **101** empfängt in jeder Zeitscheibe je eine periodische zeitgesteuerte Nachricht vom PCS **103,** vom MS **104** und vom FBS **105.** Wenn das MS **104** den Wert *TRUE* mitgeteilt hat, so leitet das DS **101** die vom PCS **103** empfangenen Sollwerte in einer zeitgesteuerten Nachricht zum IA **102.** Wenn das MS **104** den Wert *FALSE* mitgeteilt hat, so leitet das DS **101** die vom FBS **105** empfangenen Sollwerte zum intelligenten IA **102.** Der IA **102** verfügt über einen weiteren, vom zweiten Eingangskanal 108 unabhängigen Eingangskanal **107,** den sogenannten ersten Eingangskanal 107, über welchen das DS **101** die ausgewählten Sollwerte an den IA **102** sendet.

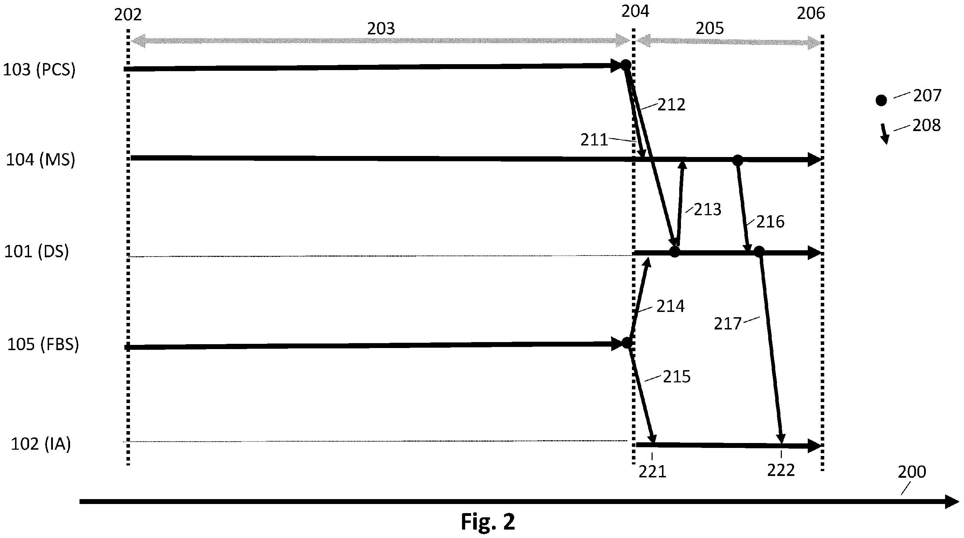

Im fehlerfreien Fall empfängt der IA **102** zuerst zu einem *a priori* bekannten (sogenannten zweiten) Zeitpunkt (Zeitpunkt_2 **221** in Fig. 2) eine Nachricht vom FBS **105** und später zu einem *a priori* bekannten (sogenannten ersten) Zeitpunkt (Zeitpunkt_1 **222** in Fig. 2) eine Nachricht vom DS **101.** Zeitlich liegt der erste Zeitpunkt **222** nach dem zweiten Zeitpunkt **221.** Wenn bis zum Zeitpunkt_1 **222** keine Nachricht vom DS **101** beim intelligente Aktuator **102** eingetroffen ist (weil das DS **101** aufgrund *eines fail-silent* Fehlers ausgefallen ist), dann nimmt der IA **102** die Sollwerte, die in der zum Zeitpunkt_2 **221** vom FBS **105** empfangenen Nachricht enthalten sind. In den folgenden Zeitscheiben nimmt der intelligente IA **102** die vom FBS **105** erhaltenen Sollwerte, bis die Anlage einen sicheren Zustand einnimmt und das Steuerungssystem neu initialisiert wird.

In Fig. 2 ist der zeitliche Verlauf der Nachrichtenübertragungen innerhalb einer Zeitscheibe dargestellt. Auf der Abszisse **200** ist das Fortschreiten der Zeit skizziert. Die Punkte **207** markieren *Sendezeitpunkte* (SZ) von Nachrichten und Pfeilspitzen **208** markieren jeweils den *Empfangszeitpunkt (EZ)* einer Nachricht.

Aus zeitlicher Sicht gliedert sich eine Zeitscheibe in zwei aufeinanderfolgende Phasen, die *Berechnungsphase* **203** mit dem Startpunkt **202** und dem Endpunkt **204** und die folgende *Überprüfungsphase* **205** mit dem Startpunkt **204** und dem Endpunkt **206.** In der Berechnungsphase **203** sind das PCS **103,** das FBS **105** und das MS **104** aktiv. In der Überprüfungsphase **205** sind das MS **104,** das DS **101** und der IA **102** aktiv.

Es ist vorteilhaft, wenn das MS **104** aus zwei Subsystemen, einem *Berechnungssystem* und einem *Überprüfungssystem,* besteht, wobei die Gesamtheit dieser beiden Subsysteme eine einzige Fault-Containment Unit bildet. Es ist dann möglich, dass während das *Überprüfungssystem* des MS **104** die Überprüfung der Sollwerte in der Überprüfungsphase **205** der gegenwärtigen Zeitscheibe vornimmt, das *Berechnungssystem* des MS 104 zeitlich parallel dazu die Berechnung des Umweltmodells in der Berechnungsphase 203 der folgenden Zeitscheibe vornimmt.

Nach Beginn der Berechnungsphase 203 jeder Zeitscheibe lesen das PCS 103 und das FBS 105 ihre Sensoren, bilden ein Modell der Anlage und der Umwelt und errechnen neue Sollwerte. Das MS 104 bildet mit seinen Sensordaten ein Modell der Anlage und der Umwelt, um anschließend die Korrektheit der Sollwerte vom PCS 103 in Bezug auf dieses unabhängig entwickelte Modell in der Überprüfungsphase **205** überprüfen zu können.

Am Ende der Berechnungsphase **203** (oder vor dem Ende der Berechnungsphase **203,** sobald die Berechnungen abgeschlossen sind) sendet das PCS **103** eine Nachricht **211** mit den errechneten Sollwerten an das MS **104** und eine Nachricht **212** mit den errechneten Sollwerten an das DS **101.**

Am Ende der Berechnungsphase **203** (oder vor dem Ende der Berechnungsphase **203,** sobald die Berechnungen abgeschlossen sind) sendet das FBS **105** eine Nachricht **214** mit den errechneten Sollwerten an das MS **104** und eine Nachricht **215** mit den errechneten Sollwerten an den zweiten Eingangskanal **108** des IA **102,** wo die Nachricht zum zweiten Zeitpunkt **221** eintrifft.

Die Überprüfungsphase beginnt zum Zeitpunkt **204.** Vorzugsweise sendet zuerst das DS **101** die vom PCS **103** empfangenen Sollwerte in einer Nachricht **213** an das MS **104,** damit ein byzantinischer Fehler des PCS **103** erkannt werden kann. Im Falle, dass der Inhalt der Nachricht **213** vom Inhalt der Nachricht **211** abweicht, liegt ein Byzantinischer Fehler des PCS **103** vor. In diesem Fall setzt das MS **104** den Inhalt einer Nachricht **216,** die das MS **104** an das DS **101** sendet, auf *FALSE.* Im Falle, dass der Inhalt der Nachricht **216** FALSE ist, enthält die Nachricht, die das DS **101** an den ersten Eingangskanal**107** des IA **102** sendet, die Sollwerte, die das DS **101** vom FBS **105** erhalten hat, als ausgewählte Sollwerte.

Wurde kein byzantinischer Fehler erkannt, überprüft im Zeitintervall zwischen dem EZ der Nachricht **211** vom PCS **103** im MS **104** und dem SZ einer Nachricht **216,** die das **MS 104** an das DS **101** sendet, das MS **104** auf der Basis seines Modells (das in der Berechnungsphase **203** mit der Sensorik **110** des MS **104** errechnet wurde), ob die vom PCS **103** empfangenen Sollwerte in dieser Umwelt ein sicheres Verhalten der Anlage gewährleisten. Ist dies der Fall, so sendet das MS **104** in einer Nachricht **216** den Wert *TRUE* an das DS **101,** anderenfalls den Wert *FALSE.*

Im Zeitintervall zwischen dem EZ der Nachricht **216** im DS **101** und dem SZ einer Nachricht **217,** welche das DS **101** an den IA **102** sendet, entscheidet das DS **101** wie folgt: Ist der Wert in der Nachricht **216** *TRUE* (und es liegt kein byzantinischer Fehler des PCS **103** vor), so sendet das DS **101** die vom PCS **103** in Nachricht **212** empfangenen Sollwerte in der Nachricht **217** an den ersten Eingangskanal **107** des IA **102,** wo die Nachricht zum ersten Zeitpunkt_1 **222** eintrifft, anderenfalls sendet das DS **101** die vom FBS **105** in Nachricht **214** empfangenen Sollwerte in der Nachricht **217** an den ersten Eingangskanal **107** des IA **102,** wo die Nachricht zum ersten Zeitpunkt_1 **222** eintrifft.

Mit der (ersten) Entscheidung des DS **101,** die Sollwerte vom FBS **105** an den intelligenten Aktuator **102** zu senden, ändert sich die Situation des DS **101** von *normal* zu *anormal.* Diese Änderung wird in einer *Situationsvariablen* des DS **101** festgehalten. Solange diese *Situationsvariable* den Wert *anormal* enthält, sendet das DS **101** die vom FBS **105** in Nachricht **214** enthaltenen Sollwerte an den IA **102.** Nach einer Neuinitialisierung des Steuerungssystems oder des DS **101** wird der Wert der *Situationsvariablen* von *anormal* wieder auf *normal* gesetzt.

Unmittelbar nach dem *a priori* bekannten Empfangszeitpunkt (EZ) **222** der Nachricht **217** überprüft der IA **102,** ob eine Nachricht **217** vom DS **101** in der gegenwärtigen Zeitscheibe empfangen wurde. Ist dies der Fall, werden die Sollwerte dieser Nachricht **217** zur Anwendung gebracht. Anderenfalls (bei einem fail-silent Fehler des DS **101)** werden die Sollwerte aus der Nachricht **215** vom FBS **105** verwendet.

Mit der Entscheidung des IA **102,** die Sollwerte direkt vom FBS **105** zu verwenden, ändert sich die Situation des IA **102** von *normal* zu *anormal.* Diese Änderung wird in einer *Situationsvariablen* des **IA 102** festgehalten. Nach einer Neuinitialisierung des Steuerungssystems oder des IA **102** wird der Wert der *Situationsvariablen* von *anormal* wieder auf *normal* gesetzt.

Da in dem offen gelegten Steuerungssystem die beschriebenen Nachrichten vorzugsweise eine Zustandssemantik haben, können im Zeitintervall *(Sendezeitpunkt einer Datenübertragung, Empfangszeitpunkt einer Datenübertragung)* auch zwei oder mehr Kopien einer Nachricht gesendet werden, um den Ausfall einer oder mehrerer Nachrichten zu tolerieren.

Da die Entwicklung und der Bau eines *fail-silent Systems* weniger Aufwand erfordert als die Entwicklung und der Bau eines fehlertoleranten Systems, das immer funktionieren muss, ist die Erfindung von großer wirtschaftlicher Bedeutung.

## Patentansprüche

1. *Steuerungssystem* zur sicheren Steuerung einer technischen Anlage, wobei das *Steuerungssystem* vier voneinander unabhängige Computersubsysteme umfasst, ein *Primary Control System, PCS,* **(103),** ein *Monitoring System, MS,* **(104),** ein *Fallback System, FBS,* **(105)** und ein *Decision System, DS,* **(101),**
wobei
*das PCS* **(103)** in jeder Zeitscheibe Sollwerte für die Steuerung der technischen Anlage berechnet und die Sollwerte vor dem Ende der Zeitscheibe jeweils in einer Nachricht an das MS **(104)** und das DS **(101)** sendet, und wobei
das MS **(104)** in jeder Zeitscheibe die Sollwerte, die es vom PCS **(103)** erhalten hat, überprüft, und das Ergebnis dieser Überprüfung*-TRUE* oder *FALSE-*vor dem Ende der Zeitscheibe in einer Nachricht an das DS **(101)** übermittelt, und wobei
das *FBS **(105)*** in jeder Zeitscheibe Sollwerte berechnet, welche die Anlage von einem gegenwärtigen Zustand in einen sicheren Zustand führen können, und wobei das FBS **(105)** diese Sollwerte in einer Nachricht an das DS **(101)** sendet, und wobei
das DS **(101)** in jeder Zeitscheibe je eine Nachricht von dem PCS **(103),** dem MS **(104)** und dem FBS **(105)** empfängt und aufgrund des Ergebnisses der Überprüfung durch das MS **(104)** entscheidet, ob es die Sollwerte des PCS **(103)** oder des FBS **(105),** die sogenannten "ausgewählten" Sollwerte, an die Aktuatoren **(102)** gesendet werden, und wobei
die Aktuatoren **(102)** intelligente Aktuatoren, IA, sind, welche über einen ersten Eingangskanal **(107)** und eine zweiten Eingangskanal **(108)** verfügen,
**dadurch gekennzeichnet, dass**
das DS **(101)** in jeder Zeitscheibe im fehlerfreien Fall des DS **(101)** die ausgewählten *Sollwerte* in einer zeitgesteuerten Nachricht **(217)** zu einem *a priori* bestimmten periodischen ersten Zeitpunkt **(222)** an den ersten *Eingangskanal* **(107)** des IA **(102)** sendet,
und wobei
das DS **(101)** *ein fail-silent Verhalten* aufweist, so dass bei Auftreten eines Fehlers im DS **(101)** keine Nachricht an den IA **(102)** gesendet wird,
und wobei
das FBS **(105)** dazu eingerichtet ist, in jeder *Zeitscheibe* seine errechneten Sollwerte in einer *zeitgesteuerten Nachricht* zu einem *a priori* bestimmten periodischen zweiten Zeitpunkt_2 **(221)** an den zweiten *Eingangskanal* **(108)** des IA **(102)** zu senden,
und wobei
in jeder Zeitscheibe der zweite Zeitpunkt_2 **(221)** zeitlich vor dem ersten Zeitpunkt_1 **(222)** liegt,
und wobei
der IA **(102)** nach dem ersten Zeitpunkt_1 **(222)** überprüft, ob vom IA **(102)** eine vom DS **(101)** gesendete Nachricht in der gegenwärtigen Zeitscheibe empfangen wurde, und wobei
- falls dies der Fall ist, der IA **(102)** die in der vom DS **(101)** gesendeten und vom IA **(102)** empfangenen Nachricht **(217)** enthaltenen *Sollwerte* an die Anlage leitet,
und
- falls dies nicht der Fall ist, der IA **(102)** die in der vom FBS **(105)** an den zweiten Eingangskanal **(108)** des IA **(102)** gesendeten Nachricht **(215)** enthaltenen *Sollwerte* an die Anlage leitet, und der IA **(102)** in allen folgenden Zeitscheiben so lange die vom FBS **(105)** über den zweiten Empfangskanal **(108)** empfangenen Sollwerte an die Anlage leitet, bis das Steuerungssystem neu initialisiert ist.

2. Steuerungssystem nach Anspruch 1, **wobei** das MS **(104)** ein Modell der Anlage und seiner Umgebung erzeugt und auf Basis dieses Modells überprüft, ob die vom PCS **(103)** empfangenen Sollwerte ein sicheres Verhalten der Anlage gewährleisten, und falls ein sicheres Verhalten gewährleistet ist, als Ergebnis der Prüfung der Nachricht **(216)** den Wert *TRUE* an das DS **(101)** sendet und anderenfalls den Wert *FALSE* in der Nachricht **(216)** sendet.

3. Steuerungssystem nach Anspruch 1 oder 2, **wobei** das Steuerungssystem neu initialisiert wird, nachdem die Anlage einen *sicheren Zustand* erreicht hat.

4. Steuerungssystem nach einem der vorhergehenden Ansprüche, **wobei** das MS **(104)** aus zwei Subsystemen, einem *Berechnungssystem* und einem *Überprüfungssystem,* besteht, wobei die Gesamtheit dieser beiden Subsysteme eine einzige *Fault-Containment Unit* bildet.

5. Steuerungssystem nach einem der vorhergehenden Ansprüche, **wobei** im MS **(104)** die Berechnungsphase der nächstfolgenden Zeitscheibe zeitlich parallel zur Überprüfungsphase der gegenwärtigen Zeitscheibe ausgeführt wird.

6. Steuerungssystem nach einem der vorhergehenden Ansprüche, **wobei,** wenn die Nachricht **(216)** des MS **(104)** an das DS **(101)** den Wert FALSE enthält, im fehlerfreien Fall des DS **(101)** das DS **(101)** in seiner Nachricht an den ersten Eingangskanal **(107)** des IA **(102)** die vom FBS **(105)** erhaltenen Sollwerte als ausgewählte Sollwerte übermittelt, und wobei das DS **(101)** in allen folgenden Zeitscheiben so lange die Sollwerte des FBS **(105)** an den ersten Empfangskanal **(107)** des IA **(102)** sendet, bis das Steuerungssystem oder das DS **(101)** neu initialisiert ist.

7. Steuerungssystem nach einem der vorhergehenden Ansprüche, **wobei** das MS **(104)** in einer Zeitscheibe in einer Nachricht **(211)** die vom PCS **(103)** errechneten Sollwerte erhält, weiters in einer Nachricht **(213)** vom DS **(101)** die Sollwerte, die das PCS **(103)** in einer Nachricht **(212)** an das DS **(101)** gesendet hat, erhält, und das MS **(104)** eine Nachricht **(216)** an das DS **(101)** sendet, deren Inhalt auf FALSE gesetzt ist, falls der Inhalt der Nachricht **(213)** vom DS **(101)** vom Inhalt der Nachricht **(211)** vom PCS **(103)** abweicht.

8. Steuerungssystem nach einem der vorhergehenden Ansprüchen, **wobei** das DS **(101)** eine *einfache* Software und einen fehlererkennenden Prozessor umfasst, auf welchem die einfache Software zur Berechnung der Sollwerte ausgeführt wird.

9. Verfahren zur sicheren Steuerung einer technischen Anlage mit einem Steuerungssystem, wobei das *Steuerungssystem* vier voneinander unabhängige Computersubsysteme umfasst, ein *Primary Control System, PCS,* **(103),** ein *Monitoring System, MS,* **(104),** ein *Fallback System, FBS,* **(105)** und ein *Decision System, DS,* **(101),** wobei
*das PCS* **(103)** in jeder Zeitscheibe Sollwerte für die Steuerung der technischen Anlage berechnet und die Sollwerte vor dem Ende der Zeitscheibe jeweils in einer Nachricht an das MS **(104)** und das DS **(101)** sendet, und wobei
das MS **(104)** in jeder Zeitscheibe die Sollwerte, die es vom PCS **(103)** erhalten hat, überprüft, und das Ergebnis dieser Überprüfung*-TRUE* oder *FALSE-*vor dem Ende der Zeitscheibe in einer Nachricht an das DS **(101)** übermittelt, und wobei
das *FBS **(105)*** in jeder Zeitscheibe Sollwerte berechnet, welche die Anlage von einem gegenwärtigen Zustand in einen sicheren Zustand führen können, und wobei das FBS **(105)** diese Sollwerte in einer Nachricht an das DS **(101)** sendet, und wobei
das DS **(101)** in jeder Zeitscheibe je eine Nachricht von dem PCS **(103),** dem MS **(104)** und dem FBS **(105)** empfängt und aufgrund des Ergebnisses der Überprüfung durch das MS **(104)** entscheidet, ob es die Sollwerte des PCS **(103)** oder des FBS **(105),** die sogenannten "ausgewählten" Sollwerte, an die Aktuatoren **(102)** gesendet werden, und wobei
die Aktuatoren **(102)** intelligente Aktuatoren, IA, sind, welche über einen ersten Eingangskanal **(107)** und eine zweiten Eingangskanal **(108)** verfügen,
**dadurch gekennzeichnet, dass**
das DS **(101)** in jeder Zeitscheibe im fehlerfreien Fall des DS **(101)** die ausgewählten *Sollwerte* in einer zeitgesteuerten Nachricht **(217)** zu einem *a priori* bestimmten periodischen ersten Zeitpunkt **(222)** an den ersten *Eingangskanal* **(107)** des IA **(102)** sendet,
und wobei
das DS **(101)** *ein fail-silent Verhalten* aufweist, so dass bei Auftreten eines Fehlers im DS **(101)** keine Nachricht an den IA **(102)** gesendet wird,
und wobei
das FBS **(105)** dazu eingerichtet ist, in jeder *Zeitscheibe* seine errechneten Sollwerte in einer *zeitgesteuerten Nachricht* zu einem *a priori* bestimmten periodischen zweiten Zeitpunkt_2 **(221)** an den zweiten *Eingangskanal* **(108)** des IA **(102)** zu senden,
und wobei
in jeder Zeitscheibe der zweite Zeitpunkt_2 **(221)** zeitlich vor dem ersten Zeitpunkt_1 **(222)** liegt,
und wobei
der IA **(102)** nach dem ersten Zeitpunkt_1 **(222)** überprüft, ob vom IA **(102)** eine vom DS **(101)** gesendete Nachricht in der gegenwärtigen Zeitscheibe empfangen wurde, und wobei
- falls dies der Fall ist, der IA **(102)** die in der vom DS **(101)** gesendeten und vom IA **(102)** empfangenen Nachricht **(217)** enthaltenen *Sollwerte* an die Anlage leitet,
und
- falls dies nicht der Fall ist, der IA **(102)** die in der vom FBS **(105)** an den zweiten Eingangskanal **(108)** des IA **(102)** gesendeten Nachricht **(215)** enthaltenen *Sollwerte* an die Anlage leitet, und der IA **(102)** in allen folgenden Zeitscheiben so lange die vom FBS **(105)** über den zweiten Empfangskanal **(108)** empfangenen Sollwerte an die Anlage leitet, bis das Steuerungssystem neu initialisiert ist.

10. Verfahren nach Anspruch 9, **wobei** das MS **(104)** ein Modell der Anlage und seiner Umgebung erzeugt und auf Basis dieses Modells überprüft, ob die vom PCS **(103)** empfangenen Sollwerte ein sicheres Verhalten der Anlage gewährleisten, und falls ein sicheres Verhalten gewährleistet ist, als Ergebnis der Prüfung der Nachricht **(216)** den Wert *TRUE* an das DS **(101)** sendet und anderenfalls den Wert *FALSE* in der Nachricht **(216)** sendet.

11. Verfahren nach Anspruch 9 oder 10, **wobei** das Steuerungssystem neu initialisiert wird, nachdem die Anlage einen *sicheren Zustand* erreicht hat.

12. Verfahren nach einem der Ansprüche 9 bis 11, **wobei** das MS **(104)** aus zwei Subsystemen, einem *Berechnungssystem* und einem *Überprüfungssystem,* besteht, wobei die Gesamtheit dieser beiden Subsysteme eine einzige *Fault-Containment Unit* bildet.

13. Verfahren nach einem der Ansprüche 9 bis 12, **wobei** im MS **(104)** die Berechnungsphase der nächstfolgenden Zeitscheibe zeitlich parallel zur Überprüfungsphase der gegenwärtigen Zeitscheibe ausgeführt wird.

14. Verfahren nach einem der Ansprüche 9 bis 13, **wobei,** wenn die Nachricht **(216)** des MS **(104)** an das DS **(101)** den Wert FALSE enthält, im fehlerfreien Fall des DS **(101)** das DS **(101)** in seiner Nachricht an den ersten Eingangskanal **(107)** des IA **(102)** die vom FBS **(105)** erhaltenen Sollwerte als ausgewählte Sollwerte übermittelt, und wobei das DS **(101)** in allen folgenden Zeitscheiben so lange die Sollwerte des FBS **(105)** an den ersten Empfangskanal **(107)** des IA **(102)** sendet, bis das Steuerungssystem oder das DS **(101)** neu initialisiert ist.

15. Verfahren nach einem der Ansprüche 9 bis 14, **wobei** das MS (104) in einer Zeitscheibe in einer Nachricht **(211)** die vom PCS **(103)** errechneten Sollwerte erhält, weiters in einer Nachricht **(213)** vom DS **(101)** die Sollwerte, die das PCS **(103)** in einer Nachricht **(212)** an das DS **(101)** gesendet hat, erhält, und das MS **(104)** eine Nachricht **(216)** an das DS **(101)** sendet, deren Inhalt auf FALSE gesetzt ist, falls der Inhalt der Nachricht **(213)** vom DS **(101)** vom Inhalt der Nachricht **(211)** vom PCS **(103)** abweicht.
